(19) Europäisches Patentamt
European Patent Office
Office européen des brevets

(11) **EP 4 191 939 A1**

(12) **EUROPEAN PATENT APPLICATION**
published in accordance with Art. 153(4) EPC

(43) Date of publication:
**07.06.2023   Bulletin 2023/23**

(21) Application number: **20947126.7**

(22) Date of filing: **27.07.2020**

(51) International Patent Classification (IPC):
**H04L 9/32** *(2006.01)*

(52) Cooperative Patent Classification (CPC):
**H04L 9/32**

(86) International application number:
**PCT/JP2020/028716**

(87) International publication number:
**WO 2022/024182 (03.02.2022 Gazette 2022/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventor: **MIYAMAE, Takeshi**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **KNOWLEDGE PROOF METHOD, KNOWLEDGE PROOF PROGRAM, AND INFORMATION PROCESSING APPARATUS**

(57)    Verification of non-interactive zero-knowledge proofs is deterred from being entrusted to a third party.

A first information processing device (1) generates a ciphertext (y') obtained by encrypting a predetermined value (y) with a public key (pk) of a verifier. Furthermore, the first information processing device (1) generates proof information (n) based on a second function (F') and a second input value ({u', w}) including a first input value ({u, w}) and the public key (pk). The second function (F') includes calculation represented by a first function (F) and calculation of encrypting a calculation result of the first function (F) with the public key (pk). The proof information (n) is information that proves having a secret value (w) to be kept secret included in the second input value by non-interactive zero-knowledge proof. The first information processing device (1) transmits knowledge proof information including a ciphertext (y') and the proof information (n) to a second information processing device (2) managed by the verifier having a private key (vk) corresponding to the public key (pk).

FIG. 1

FIRST INFORMATION PROCESSING DEVICE (PROVER) — 1

STORAGE UNIT — 1a

CERTIFICATE (PERSONAL INFORMATION + DIGITAL SIGNATURE) — 3

PROCESSING UNIT — 1b

PREDETERMINED VALUE y = PERSONAL INFORMATION

PUBLIC KEY pk OF VERIFIER

GENERATE CIPHERTEXT y' OBTAINED BY ENCRYPTING PREDETERMINED VALUE y WITH PUBLIC KEY pk OF VERIFIER

GENERATE PROOF INFORMATION OF KNOWING w SATISFYING y' = F'(u', w) (zk-SNARK)

KNOWLEDGE PROOF INFORMATION (PROOF INFORMATION + CIPHERTEXT y')

FUNCTION F (y = F(u, w))
u = {VERIFICATION KEY}
w = {CERTIFICATE}
↓
FUNCTION F' = Enc(pk, y)
↓
y' = F'(u', w)
u' = {VERIFICATION KEY, pk}

SECOND INFORMATION PROCESSING DEVICE (VERIFIER) — 2

VERIFY PROOF INFORMATION $\pi$

DECRYPT CIPHERTEXT y' WITH PRIVATE KEY (vk) OF VERIFIER

EP 4 191 939 A1

**Description**

FIELD

The present invention relates to a knowledge proof method, a knowledge proof program, and an information processing device.

BACKGROUND

Zero-knowledge proof is one of cryptographic techniques. A zero-knowledge proof is a way for one person (prover) to prove that a proposition the prover has is true without conveying any knowledge other than that the proposition is true, when telling another person (verifier) that the proposition is true. The zero-knowledge proof includes: an interactive zero-knowledge proof that gives a proof through repeated interactions between the prover and the verifier; and a non-interactive zero-knowledge proof that gives a proof by onetime transmission of information from the prover to the verifier.

The non-interactive zero-knowledge proof can be effectively used in, for example, a technical field called self-sovereign identity. The self-sovereign identity is a technique that performs identity management based on a concept that a user himself/herself manages and controls all pieces of personal information linked to the user. Instead of entrusting management of the personal information to companies or others, the user prepares his/her own database (or uses a shared database such as a blockchain) and manages access by himself/herself. Under such a circumstance, the zero-knowledge proofs are used to allow users to mutually prove their identities while maintaining their privacy. By use of the non-interactive-type zero-knowledge proof as the zero-knowledge proof, convenience of identity proof can be improved.

As an information proof technique, for example, a digital signature method has been proposed in which verification data is simply sent from a signer to a verifier and is not transferred to a third party without mutual communication.

As the non-interactive zero-knowledge proof, there is zero-knowledge succinct non-interactive argument of knowledge (zk-SNARK), for example, and a system called Pinocchio using this zk-SNARK has been proposed. Furthermore, an application of zk-SNARK to distributed ledgers has also been proposed.

CITATION LIST

PATENT DOCUMENT

Patent Document 1: Japanese Laid-open Patent Publication No. 09-171349

NON-PATENT DOCUMENT

Non-Patent Document 1: B. Parno, C. Gentry, J. Howell and M. Raykova, "Pinocchio: nearly practical verifiable computation", IEEE Symposium on Security and Privacy Oakland 2013 corrected version, 13 May 2013
Non-Patent Document 2: Ken Naganuma, "Anonymous Remittance on Distributed Ledger and its Audit -Secure Protocol Using Zero-Knowledge Proof-", Information Processing Vol. 61, No. 2, 15 Jan 2020, pp. 152-158

SUMMARY

[TECHNICAL PROBLEM]

In the non-interactive zero-knowledge proof, verification by the verifier is possible even if the prover is not online, but an unspecified number of users can perform verification. Therefore, the verifier can entrust the verification to a third party without obtaining permission of the prover. Free entrustment of verification may be detrimental to the prover.

Suppose, for example, a case of proving a fact that a prover, who is a public figure, has a certificate proving his/her income with a non-interactive zero-knowledge proof. In this case, if a third party is entrusted with the verification that the disclosed income is correct, the third party will know the income of the prover and know that the income is correct at the same time. In other words, personal information of the prover is leaked with a proof that the information is error-free, increasing a risk of misuse of the information.

In one aspect, an object of the present invention is to deter verification of non-interactive zero-knowledge proofs from being entrusted to a third party.

[SOLUTION TO PROBLEM]

In one proposal, a knowledge proof method by a first information processing device managed by a prover is provided.

The first information processing device generates a ciphertext obtained by encrypting a predetermined value with a public key of a verifier. Furthermore, the first information processing device generates proof information that proves, by a non-interactive zero-knowledge proof, having a secret value to be kept secret included in a second input value with which the ciphertext is able to be obtained as a calculation result in a case where the second input value is input to a second function, based on the second function and the second input value, the second function including calculation represented by a first function in which a calculation result in a case where a first input value is input becomes the predetermined value and calculation in which the calculation result of the first function is encrypted with the public key, and the second input value including the first input value and the public key. Then, the first information processing device transmits knowledge proof information including the ciphertext and the proof information to a second information processing device managed by the verifier having a private key corresponding to the public key.

According to an aspect of the embodiments, a knowledge proof method includes by a first information processing device managed by a prover, generating a ciphertext obtained by encrypting a predetermined value with a public key of a verifier; generating proof information that proves, by a non-interactive zero-knowledge proof, having a secret value to be kept secret included in a second input value with which the ciphertext is able to be obtained as a calculation result in a case where the second input value is input to a second function, based on the second function and the second input value, wherein the second function includes calculation represented by a first function in which a calculation result in a case where a first input value is input becomes the predetermined value and calculation in which the calculation result of the first function is encrypted with the public key, and the second input value includes the first input value and the public key; and transmitting knowledge proof information that includes the ciphertext and the proof information to a second information processing device managed by the verifier, who has a private key that corresponds to the public key.

[ADVANTAGEOUS EFFECTS OF INVENTION]

According to one aspect, it is possible to deter verification of non-interactive zero-knowledge proofs from being entrusted to a third party.

The above-described object and other objects, features, and advantages of the present invention will become clear from the following description related to the accompanying drawings, which illustrate favorable embodiments as examples of the present invention.

BRIEF DESCRIPTION OF DRAWINGS

FIG. 1 is a diagram illustrating an example of a knowledge proof method according to a first embodiment;
FIG. 2 is a diagram illustrating an example of a system configuration;
FIG. 3 is a diagram illustrating an example of hardware of a terminal device;
FIG. 4 is a diagram illustrating an example of information leakage that occurs in a case where an unspecified third party can verify information;
FIG. 5 is a diagram illustrating an example of information leakage in a case where knowledge proof information is encrypted;
FIG. 6 is a diagram illustrating an example of a non-interactive zero-knowledge proof in which verification by an unspecified third party is deterred;
FIG. 7 is a diagram illustrating an example of functions possessed by a signer's server;
FIG. 8 is a block diagram illustrating an example of functions of a terminal device, a TTP server, and a verifier server;
FIG. 9 is a sequence diagram illustrating an example of a non-interactive zero-knowledge proof processing procedure;
FIG. 10 is a flowchart illustrating an example of a presetting processing procedure by a TTP server;
FIG. 11 is a flowchart illustrating an example of a proof processing procedure by a prover's terminal device; and
FIG. 12 is a flowchart illustrating an example of a verification processing procedure by a verifier's server.

DESCRIPTION OF EMBODIMENTS

Hereinafter, the present embodiments will be described with reference to the drawings. Note that each of the embodiments may be implemented in combination with a plurality of embodiments as long as no contradiction arises.

[First Embodiment]

First, a first embodiment will be described. The first embodiment is to deter verification of non-interactive zero-knowledge proofs from being entrusted to a third party by causing a cryptography key that is a master secret of a verifier to be used in the verification of non-interactive zero-knowledge proofs.

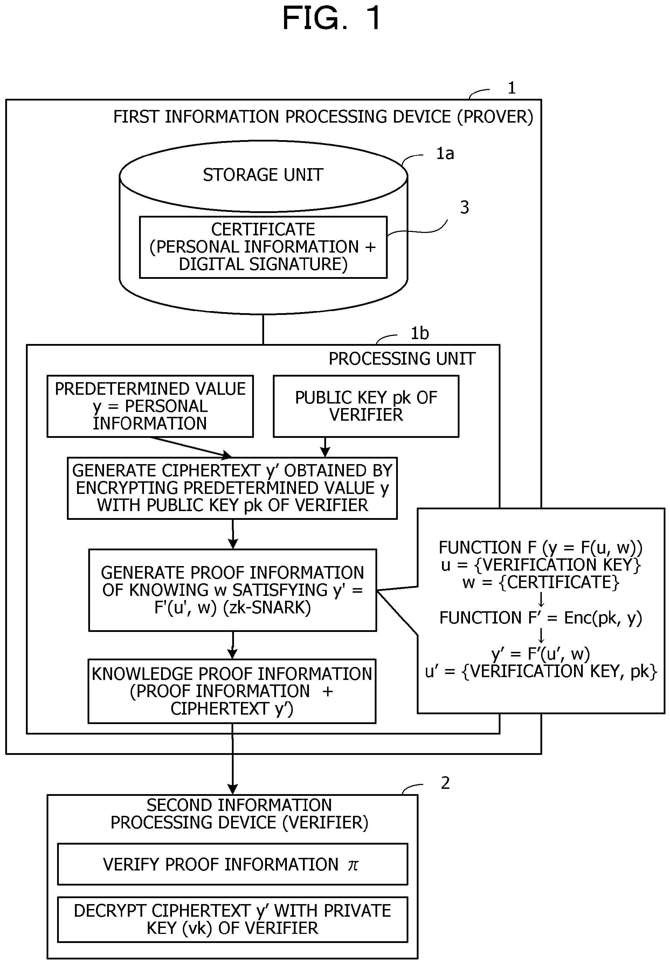

FIG. 1 is a diagram illustrating an example of a knowledge proof method according to the first embodiment. FIG. 1 illustrates an example of implementing the knowledge proof method using a first information processing device 1 managed by a prover and a second information processing device 2 managed by a verifier. The first information processing device 1 can implement the knowledge proof method according to the first embodiment by executing a program in which a knowledge proof processing procedure is described, for example. The second information processing device 2 can verify the proven knowledge by executing a knowledge proof program in which a verification processing procedure for the knowledge proven by the knowledge proof method is described, for example.

The first information processing device 1 has a storage unit 1a and a processing unit 1b. The storage unit 1a is, for example, a memory or a storage device included in the first information processing device 1. The processing unit 1b is, for example, a processor or an arithmetic circuit included in the information processing device 1.

The storage unit 1a stores, for example, a certificate 3 that indicates that personal information of the prover is authentic information. The certificate 3 includes the personal information and a digital signature that indicates that the personal information is authentic.

The processing unit 1b generates a ciphertext y' obtained by encrypting a predetermined value y with a public key pk of the verifier. The predetermined value y is, for example, the personal information of the prover. The processing unit 1b can generate the ciphertext y' by acquiring the public key pk of the verifier and encrypting the predetermined value y with the public key pk.

Furthermore, the processing unit 1b has a second function (function F') including calculation represented by a first function (function F) in which a calculation result when a first input value is input becomes the predetermined value y, and calculation (Enc(pk, y)) for encrypting a calculation result of the function F with the public key pk. The function F' may be represented by a plurality of polynomials. The first input value includes a secret value w kept secret by the prover. For example, the first input value includes a numerical value group u and the certificate 3 that is the secret value w of the prover. The numerical value group u includes a verification key of the digital signature. The function F' obtains a calculation result when a second input value {u', w} (u' = {the verification key of the digital signature, the public key pk of the verifier}) including the first input value {u, w} and the public key pk is input, as the ciphertext y'.

The processing unit 1b generates proof information n based on the function F' and the second input value {u', w} including the first input value {u, w} and the public key pk. The proof information n is information that proves having the secret value w to be kept secret included in the second input value {u', w} with which the ciphertext y' can be obtained as a calculation result when the second input value is input to the function F', by the non-interactive zero-knowledge proof. Then, the processing unit 1b transmits knowledge proof information including the ciphertext y' and the proof information n to the second information processing device 2 managed by the verifier having the private key vk corresponding to the public key pk.

The second information processing device 2 verifies that the prover has the secret value w based on the knowledge proof information. Moreover, the second information processing device 2 decrypts the ciphertext y' using the private key vk of the verifier. Then, in a case where the verification is successful and the predetermined value y is obtained by the decryption, the second information processing device 2 certifies that the prover knows the secret value w to be included in the first input value u, w for setting the calculation result of the function F to be the predetermined value y.

In this way, the prover can prove, to the verifier, that the prover has the certificate 3 without passing the certificate 3 of the personal information to the verifier by setting the personal information to be the predetermined value y and the certificate 3 of the personal information to be the secret value w, for example. For example, in the case where the personal information is the income of the prover, the income of the prover can be proved to the verifier.

At this time, the second information processing device 2 managed by the verifier can certify that the prover has the certificate 3 by decrypting the ciphertext y' with the private key of the verifier in addition to verifying the proof information n. In a case where the verifier entrusts the verification to a third party, it is not possible to verify that the prover has the certificate 3 without passing the private key, which is the master secret of the verifier, to the third party. Therefore, entrustment of the verification to the third party is deterred.

Note that zk-SNARK is a non-interactive zero-knowledge proof that needs a short data length of the knowledge proof information. zk-SNARK may be performed with the cooperation of a trustable third party. For example, the processing unit 1b of the first information processing device 1 acquires proof reference information for implementing the non-interactive zero-knowledge proof by zk-SNARK from a third information processing device managed by the trustable third party. Then, the processing unit 1b generates the proof information n using the proof reference information. Furthermore, the second information processing device 2 acquires verification reference information for implementing the non-interactive zero-knowledge proof by zk-SNARK from the third information processing device, and verifies that the prover has the secret value w using the verification reference information.

[Second Embodiment]

Next, a second embodiment will be described. The second embodiment is an example of a case where a public figure proves his/her total income using a non-interactive zero-knowledge proof.

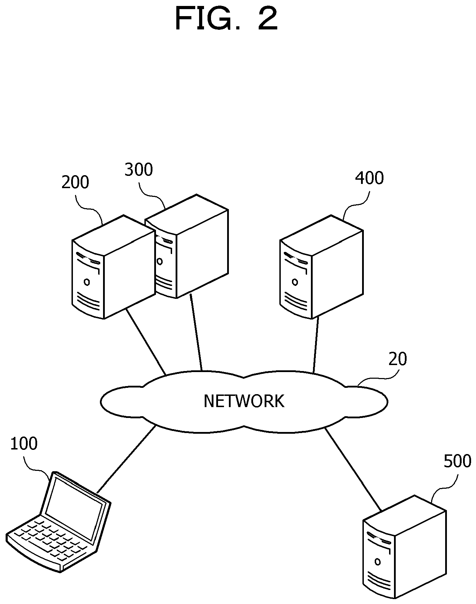

FIG. 2 is a diagram illustrating an example of a system configuration. In the example of FIG. 2, a terminal device 100 and a plurality of servers 200, 300, 400, and 500 are connected via a network 20. The terminal device 100 is a computer used by a prover. The server 200 is a computer used by a signer A. The server 300 is a computer used by a signer B. The server 400 is a computer used by a trustable third party (trusted third party (TTP)). The server 500 is a computer used by a verifier.

For example, in a case where the public figure proves his/her total income to a financial institution such as a bank, the public figure is the prover, a public institution that proves the income is the signer, and the financial institution is the verifier. In a case where the public institution that proves the income exists in each region (for example, in each country), the signer A and the signer B are respectively the public institutions in different regions.

In a case where the prover earns income in a plurality of regions (for example, in a plurality of countries), the total income of the prover will be a sum of the incomes in the respective regions. In that case, the prover will obtain an income certificate from the public institution in each region.

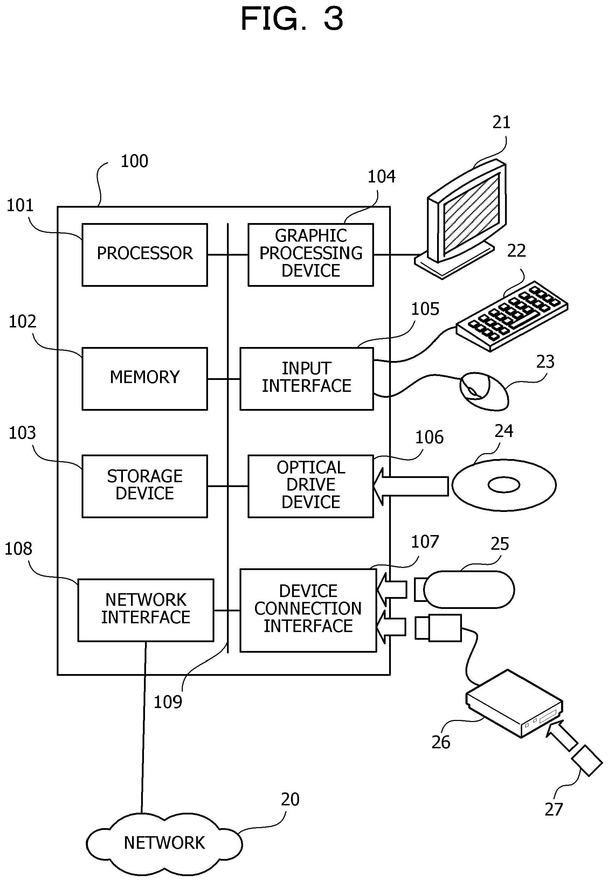

FIG. 3 is a diagram illustrating an example of hardware of the terminal device. The whole of the terminal device 100 is controlled by a processor 101. A memory 102 and a plurality of peripheral devices are connected to the processor 101 via a bus 109. The processor 101 may be a multiprocessor. The processor 101 is, for example, a central processing unit (CPU), a micro processing unit (MPU), or a digital signal processor (DSP). At least a part of functions implemented by the processor 101 executing a program may be implemented by an electronic circuit such as an application specific integrated circuit (ASIC) or a programmable logic device (PLD).

The memory 102 is used as a main storage device of the terminal device 100. The memory 102 temporarily stores at least a part of an operating system (OS) program and an application program to be executed by the processor 101. Furthermore, the memory 102 stores various types of data to be used in processing by the processor 101. As the memory 102, for example, a volatile semiconductor storage device such as a random access memory (RAM) is used.

The peripheral devices connected to the bus 109 include a storage device 103, a graphic processing device 104, an input interface 105, an optical drive device 106, a device connection interface 107, and a network interface 108.

The storage device 103 electrically or magnetically performs data writing and reading on a built-in recording medium. The storage device 103 is used as an auxiliary storage device of a computer. The storage device 103 stores an OS program, an application program, and various types of data. Note that, as the storage device 103, for example, a hard disk drive (HDD) or a solid state drive (SSD) may be used.

A monitor 21 is connected to the graphic processing device 104. The graphic processing device 104 displays an image on a screen of the monitor 21 in accordance with an instruction from the processor 101. Examples of the monitor 21 include a display device using organic electro luminescence (EL), a liquid crystal display device, and the like.

A keyboard 22 and a mouse 23 are connected to the input interface 105. The input interface 105 transmits signals transmitted from the keyboard 22 and the mouse 23 to the processor 101. Note that the mouse 23 is an example of a pointing device, and another pointing device may also be used. Examples of the another pointing device include a touch panel, a tablet, a touch pad, a track ball, and the like.

The optical drive device 106 uses laser light or the like to read data recorded in an optical disk 24 or write data to the optical disk 24. The optical disk 24 is a portable recording medium in which data is recorded to be readable by reflection of light. Examples of the optical disk 24 include a digital versatile disc (DVD), a DVD-RAM, a compact disc read only memory (CD-ROM), a CD-recordable (R)/rewritable (RW), and the like.

The device connection interface 107 is a communication interface for connecting the peripheral devices to the terminal device 100. For example, a memory device 25 and a memory reader/writer 26 may be connected to the device connection interface 107. The memory device 25 is a recording medium equipped with a communication function with the device connection interface 107. The memory reader/writer 26 is a device that writes data in a memory card 27 or reads data from the memory card 27. The memory card 27 is a card-type recording medium.

The network interface 108 is connected to the network 20. The network interface 108 transmits/receives data to/from another computer or a communication device via the network 20. The network interface 108 is a wired communication interface connected to a wired communication device such as a switch or a router with a cable, for example. Furthermore, the network interface 108 may be a wireless communication interface that is connected to and communicates with a wireless communication device such as a base station or an access point with radio waves.

The terminal device 100 may implement processing functions according to the second embodiment with hardware as described above. The servers 200, 300, 400, and 500 can also be implemented by hardware similar to the terminal device 100. Furthermore, the information processing devices 1 and 2 described in the first embodiment can also be implemented by hardware similar to the terminal device 100 illustrated in FIG. 3.

The terminal device 100 implements the processing functions of the second embodiment by executing, for example, a program recorded in a computer-readable recording medium. The program in which processing content to be executed by the terminal device 100 is described may be recorded in various recording media. For example, the program to be executed by the terminal device 100 may be stored in the storage device 103. The processor 101 loads at least a part of the program in the storage device 103 into the memory 102 and executes the program. It is also possible to record the program to be executed by the terminal device 100 in a portable recording medium such as the optical disk 24, the memory device 25, or the memory card 27. The program stored in the portable recording medium may be executed after being installed in the storage device 103 under the control of the processor 101, for example. Furthermore, the processor 101 may read the program directly from the portable recording medium, and execute the program.

With the above system, the non-interactive zero-knowledge proof can be performed. With the non-interactive zero-knowledge proof, for example, the public figure can prove his/her total income to the financial institution without giving the certificate that proves his/her total income to the financial institution. In this case, if an unspecified number of people can verify the proof of the income, personal information of the public figure will be leaked with a proof of content.

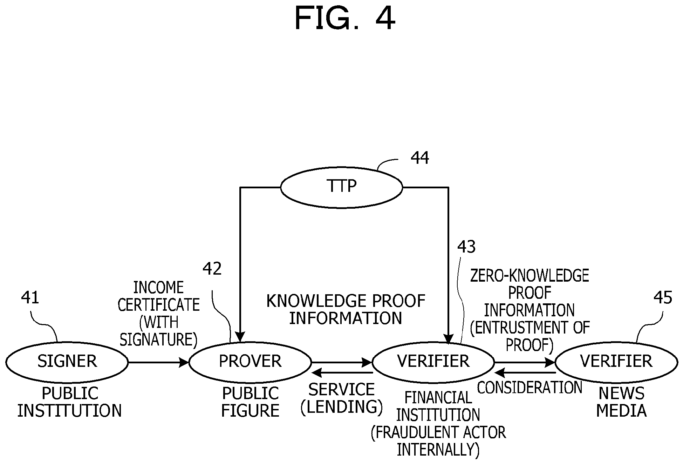

FIG. 4 is a diagram illustrating an example of information leakage that occurs in a case where an unspecified third party can verify information. FIG. 4 illustrates an example of a case where a certain public figure submitted, for debt, knowledge proof information of income generated based on an income certificate with a signature of a signer 41, which is a public institution, to a verifier 43, which is a financial institution. In the example of FIG. 4, having the income certificate is proved by a non-interactive-type zero-knowledge proof to which a technique that limits the verifier 43 is not applied.

The prover 42 causes the signer 41 as a public institution to issue the income certificate with a signature. The prover 42 and the verifier 43 obtain reference information to be used for the non-interactive zero-knowledge proof from the TTP 44. The prover 42 passes the knowledge proof information for income proof by the non-interactive zero-knowledge proof to the verifier 43. The verifier 43 as a financial institution verifies the knowledge proof information, and provides a service such as lending of funds to the prover in a case where the verification can be correctly performed.

At this time, a person in charge of the financial institution can entrust the verification of the knowledge proof information to news media such as a publisher of a magazine that publishes gossip articles. In this case, the news media can act as the verifier 45 and verify the knowledge proof information of the public figure. In a case where the income of the public figure can be verified, for example, the news media pays the person in charge of the financial institution a consideration. In this way, a fraudulent actor within the financial institution can sell the knowledge proof information that proves the income of the public figure to the third party. As a result, the third party unrelated to the borrowing of funds can not only obtain the personal information of the public figure but also verify that the personal information is correct.

Here, it is conceivable to encrypt the knowledge proof information with the public key of the verifier 43 so that only the verifier 43 can verify the knowledge proof information. However, only the encryption of the knowledge proof information is not sufficient.

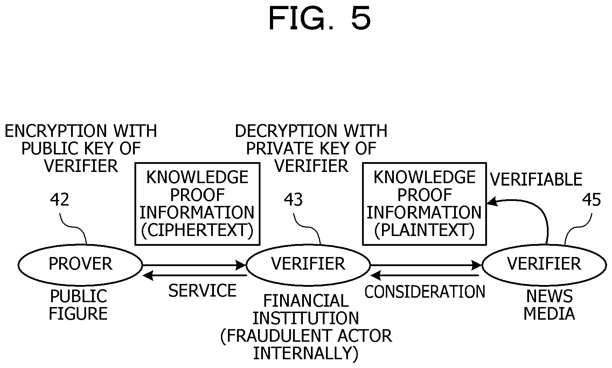

FIG. 5 is a diagram illustrating an example of information leakage in a case where the knowledge proof information is encrypted. Note that, in FIG. 5, the signer 41 and the TTP 44 illustrated in FIG. 4 are omitted.

The prover 42 encrypts the knowledge proof information proved only to the verifier 43 with the public key of the verifier 43. The prover 42 then transmits the knowledge proof information of the ciphertext to the verifier 43. Even if another verifier 45 obtains the encrypted knowledge proof information, the verifier 45 is not able to obtain the content of the knowledge proof information because the verifier 45 does not have a decryption key of the verifier 43. However, in a case where the verifier 43 fraudulently provides plaintext knowledge proof information decrypted by itself to the verifier 45, the verifier 45 can verify the knowledge proof information.

That is, under the assumption that all users are not completely trusted, the method illustrated in FIG. 5 cannot prevent leakage of the personal information with a proof of the prover 42.

Therefore, in the second embodiment, the prover 42 encrypts a calculation result of a function used in the verification with the public key of the verifier, instead of encrypting the entire knowledge proof information.

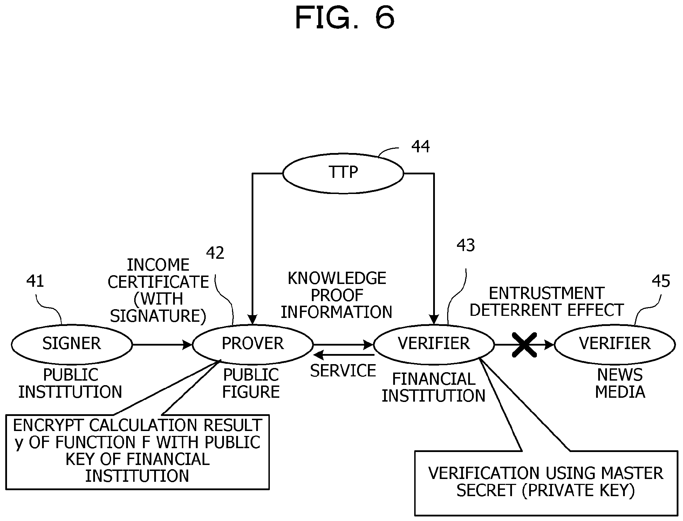

FIG. 6 is a diagram illustrating an example of a non-interactive zero-knowledge proof in which verification by an unspecified third party is deterred. The prover 42 encrypts y, which is a calculation result of a function F to be used for the non-interactive zero-knowledge proof, with the public key of the verifier 43 (financial institution). The prover 42 includes an encrypted value (ciphertext y') in the knowledge proof information. The verifier 43 verifies the knowledge proof information using the private key, which is a master secret of the verifier 43 itself. In this case, the verifier 43 is not able to perform the verification without using its own master secret. Therefore, it is possible to deter the verifier 43 from entrusting the verification of the proof to other news media or the like.

That is, in the zero-knowledge proof illustrated in FIG. 6, the verifier 43 uses its own master secret during the verification. Therefore, if a verifier entrusts the proof to the verifier 45, the verifier is required to provide the verifier 45 with its own master secret along with knowledge proof information. However, once the verifier provides its own master secret to others, security of all of functions (electronic signatures, encryption, zero-knowledge proofs, and the like) implemented by the master secret is no longer guaranteed. Therefore, in reality, the verifier 43 is not able to provide its own master secret to the verifier 45, who is a third party. As a result, use of the master secret for verification acts as a strong deterrent effect to entrusting verification.

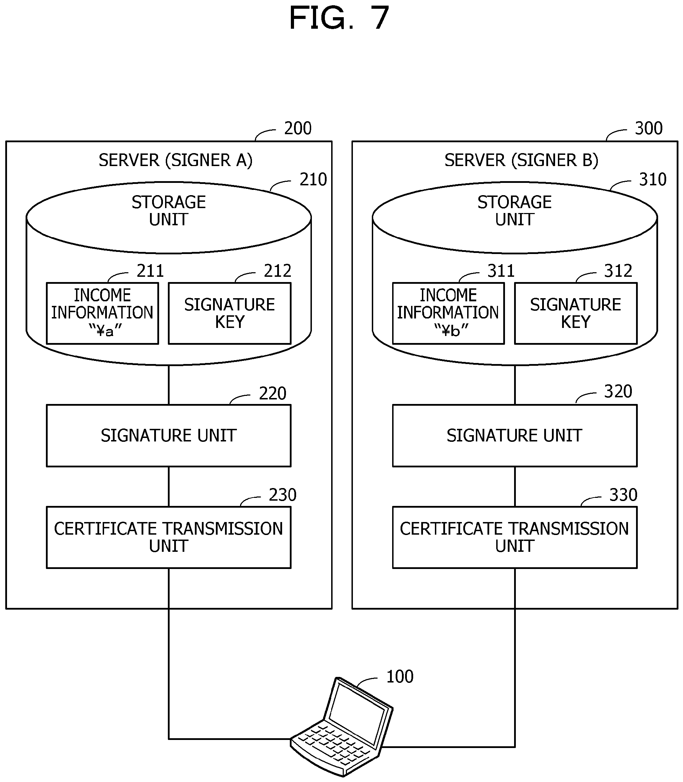

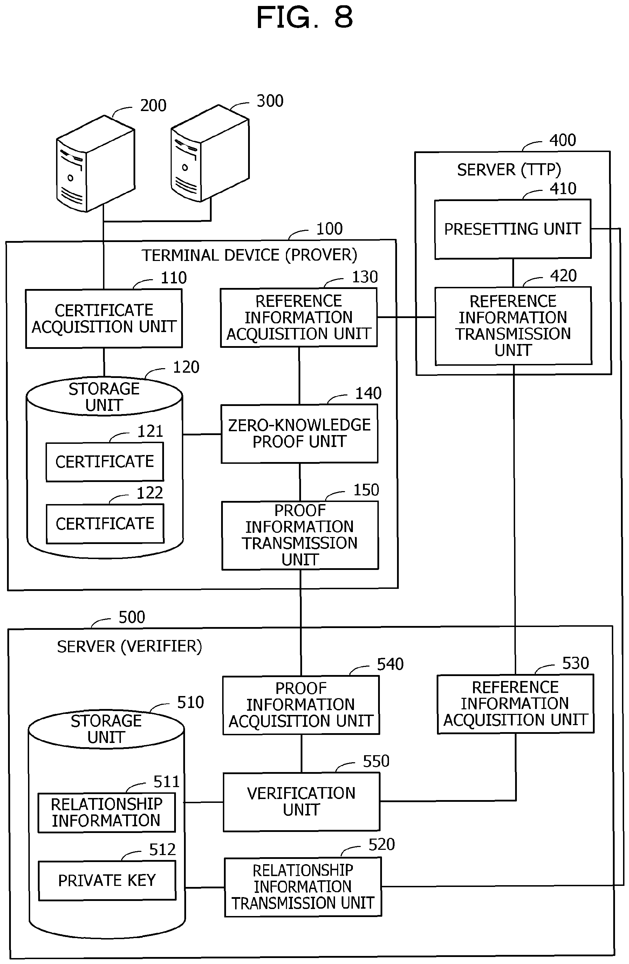

Next, functions of each device for implementing a non-interactive zero-knowledge proof with limited verifiers will be described with reference to FIGs. 7 and 8.

FIG. 7 is a diagram illustrating an example of functions possessed by servers of signers. The server 200 of the signer A has a storage unit 210, a signature unit 220, and a certificate transmission unit 230.

The storage unit 210 stores income information 211 and a signature key 212 of the signer A. The income information 211 is information indicating the income "\a" of the prover who is a public figure. The signature key 212 is a key used by the signer A to prove the income of the prover. The storage unit 210 is, for example, part of a memory of the server 200 or a storage area of a storage device.

The signature unit 220 applies a digital signature to the income information 211 of the signer using the signature key 212. For example, the signature unit 220 encrypts the income information 211 with the signature key 212. An encrypted result is the digital signature by the signer A.

The certificate transmission unit 230 transmits a certificate that certifies the income of the prover to the terminal device 100 used by the prover. The certificate includes, for example, the income information 211 of the prover and the digital signature of the signer A for the income information.

The server 300 of the signer B has a storage unit 310, a signature unit 320, and a certificate transmission unit 330.

The storage unit 310 stores income information 311 and a signature key 312 of the signer B. The income information 311 is information indicating the income "\b" of the prover who is a public figure. The signature key 312 is a key used by the signer B to prove the income of the prover. The storage unit 310 is, for example, part of a memory of the server 300 or a storage area of a storage device.

The signature unit 320 applies a digital signature to the income information 311 of the signer using the signature key 312. For example, the signature unit 320 encrypts the income information 311 with the signature key 312. An encrypted result is the digital signature by the signer B.

The certificate transmission unit 330 transmits a certificate that certifies the income of the prover to the terminal device 100 used by the prover. The certificate includes, for example, the income information 311 of the prover and the digital signature of the signer B for the income information.

FIG. 8 is a block diagram illustrating an example of functions of the terminal device, the TTP server, and the server of the verifier. The non-interactive zero-knowledge proof is implemented by presetting processing (also called setup) by the TTP server 400, proof processing by the terminal device 100 of the prover, and verification processing by the server 500 of the verifier

The TTP server 400 has a presetting unit 410 and a reference information transmission unit 420.

The presetting unit 410 acquires relationship information 511 from the server 500 of the verifier. The relationship information 511 indicates a relationship between an evidence possessed by the prover (for example, a total income certificate 121 or 122) and information to be obtained by calculation using the evidence in a case where the evidence is correct. The relationship is represented by, for example, a function and variables of the function. The presetting unit 410 generates the reference information for enabling the non-interactive zero-knowledge proof based on the relationship information 511. Hereinafter, information used for proof of the reference information will be referred to as proof reference information, and information used for verification will be referred to as verification reference information.

The reference information transmission unit 420 transmits the proof reference information to the terminal device 100 of the prover. Furthermore, the reference information transmission unit 420 transmits the verification reference information to the server 500 of the verifier.

The terminal device 100 has a certificate acquisition unit 110, a storage unit 120, a reference information acquisition unit 130, a zero-knowledge proof unit 140, and a proof information transmission unit 150.

The certificate acquisition unit 110 acquires the certificates 121 and 122 transmitted from the servers 200 and 300, respectively. The certificate acquisition unit 110 stores the acquired certificates 121 and 122 in the storage unit 120.

The storage unit 120 stores the certificates 121 and 122. The storage unit 120 is part of a storage area of the memory 102 or the storage device 103 of the terminal device 100, for example.

The reference information acquisition unit 130 acquires the proof reference information from the TTP server 400. The proof reference information is information referred to during the non-interactive zero-knowledge proof. The reference information acquisition unit 130 transmits the acquired proof reference information to the zero-knowledge proof unit 140.

The zero-knowledge proof unit 140 performs the non-interactive zero-knowledge proof regarding having the digital signature of the income, using the proof reference information. The zero-knowledge proof unit 140 generates the knowledge proof information as a result of the non-interactive zero-knowledge proof. The knowledge proof information includes a plurality of numerical values that prove a proposition that the prover is trying to prove (for example, having the certificate 121 or 122 of the total income). The zero-knowledge proof unit 140 transmits the generated knowledge proof information to the proof information transmission unit 150.

The proof information transmission unit 150 transmits the knowledge proof information to the server 500 of the verifier.

The server 500 of the verifier has a storage unit 510, a relationship information transmission unit 520, a reference information acquisition unit 530, a proof information acquisition unit 540, and a verification unit 550.

The storage unit 510 stores the relationship information 511 and a private key 512. The relationship information 511 includes, for example, a function and known variable values used in the function. The known variable values may include the public key of the verifier. The private key 512 is a key used to decrypt the ciphertext encrypted with the public key of the verifier. The private key 512 is a master secret that is to be strictly kept secret by the verifier. The storage unit 510 is, for example, part of a memory of the server 500 or a storage area of a storage device.

The relationship information transmission unit 520 transmits the relationship information 511 to the TTP server 400.

The reference information acquisition unit 530 acquires the verification reference information from the TTP server 400. The reference information acquisition unit 530 transmits the acquired verification reference information to the verification unit 550.

The proof information acquisition unit 540 acquires the knowledge proof information from the terminal device 100 of the prover. The proof information acquisition unit 540 transmits the acquired knowledge proof information to the verification unit 550.

The verification unit 550 verifies the knowledge proof information using the verification reference information and the private key 512. The verification unit 550 determines that the proposition that the prover is trying to prove is correct in a case where the knowledge proof information is verified to be correct. The verification unit 550 outputs a verification result to a monitor of the server 500 or the like.

Note that the function of each element illustrated in FIGs. 7 and 8 may be implemented by, for example, causing a computer to execute a program module corresponding to the element.

Next, a procedure for the prover to prove the total income by a non-interactive zero-knowledge proof will be described.

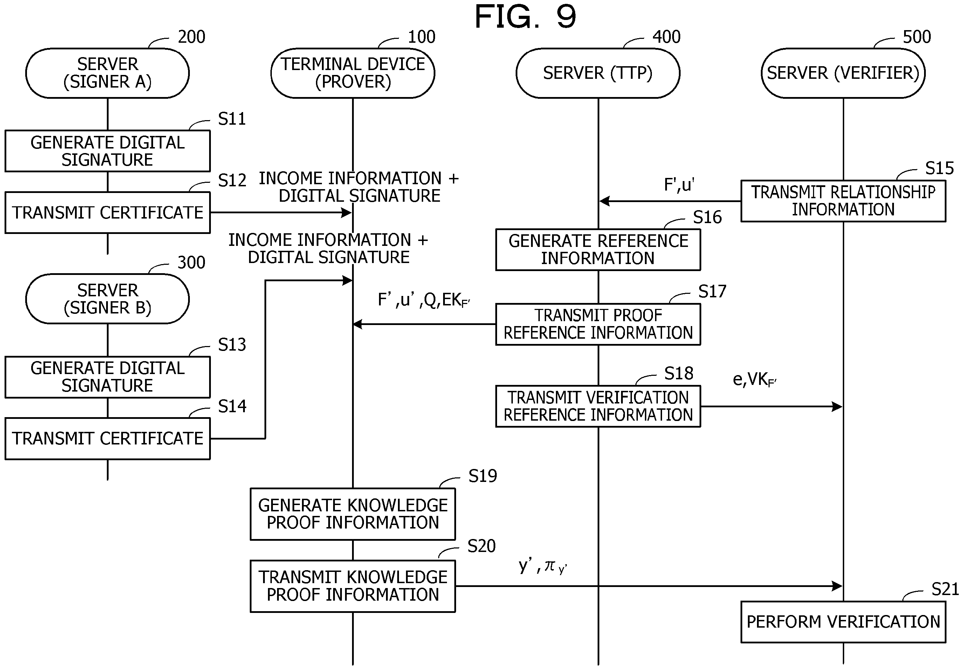

FIG. 9 is a sequence diagram illustrating an example of a non-interactive zero-knowledge proof processing procedure. The signature unit 220 of the server 200 of the signer A generates a digital signature for the income information 211 of the prover, for example, in response to a request from the prover (step S11). For example, the signature unit 220 encrypts the income information 211 with the signature key 212 of the signer A. The certificate transmission unit 230 transmits a certificate including the income information 211 and the digital signature to the terminal device 100 of the prover (step S12).

The signature unit 320 of the server 300 of the signer B generates a digital signature for the income information 311 of the prover, for example, in response to a request from the prover (step S13). For example, the signature unit 320 encrypts the income information 311 with the signature key 312 of the signer B. The certificate transmission unit 230 transmits a certificate including the income information 311 and the digital signature to the terminal device 100 of the prover (step S14).

Thereafter, the prover, who has obtained the certificate of income, applies to the verifier for provision of a service (for example, a loan). Upon receiving the application, the verifier instructs the server 500 to execute processing for confirming the total income of the prover. Then, the relationship information transmission unit 520 of the server 500 transmits the relationship information 511 for verifying that the prover has the certificate of total income to the TTP server 400 (step S15).

The relationship information 511 includes a function F' and a numerical value group u' = {u, pk} to be used as variable values of the function. The numerical value group u' includes the verification key corresponding to the signature key 212 used by the signer A for signature and the verification key corresponding to the signature key 312 used by the signer B for signature. pk is the public key of the verifier. The function F' is represented by the following expression.

$$F'(u') = Enc(F)(u') = Enc(F)(u, w, pk) \ ... \ (1)$$

Enc(F)(u, w, pk) indicates that the calculation result of the function F(u, w) is encrypted with the public key pk of the verifier. The secret value w includes the income information 211, the digital signature of the income information 211, the income information 311, and the digital signature of the income information 311. The function F(u, w) is a calculation algorithm that calculates y where the total income of the prover is y (y = a + b) after verifying the digital signature of each piece of the income information 211 and 311 with the corresponding verification key. That is, the function F'(u') is a calculation algorithm that encrypts y, which is the total income obtained by calculating the function F(u, w), with the public key of the verifier. Here, a ciphertext obtained by encrypting y as the total income is y'.

In the TTP server 400, the presetting unit 410 generates the reference information to be used for the non-interactive zero-knowledge proof (step S16). The generated reference information includes, for example, "Q, $EK_{F'}$, $VK_{F'}$, e". Q is a set of polynomials obtained by converting the function F' into a quadratic arithmetic program (QAP). $EK_{F'}$ and $VK_{F'}$ are the evaluation key and the verification key generated based on the function F', respectively. $EK_{F'}$ and $VK_{F'}$ are numerical value groups each containing a large number of numerical values. Details of the numerical values contained in $EK_{F'}$ and $VK_{F'}$ will be described below. e is a non-trivial bilinear map.

The reference information transmission unit 420 transmits the proof reference information to be used for proof to the terminal device 100 of the prover (step S17). The proof reference information includes, for example, "F', u', Q, $EK_{F'}$". The reference information transmission unit 420 transmits the verification reference information to be used for verification to the server 500 of the verifier (step S18). The verification reference information includes, for example, "e, $VF_{F'}$".

In the terminal device 100 of the prover, the reference information acquisition unit 130 acquires the proof reference information. Then, the zero-knowledge proof unit 140 generates knowledge proof information using a plurality of certificates and proof reference information (step S19). The knowledge proof information includes, for example, the ciphertext y' of the total income and the proof information $\pi_{y'}$. Then, the proof information transmission unit 150 transmits the knowledge proof information to the server 500 of the verifier (step S20).

In the server 500 of the verifier, the proof information acquisition unit 540 acquires the knowledge proof information. Then, the verification unit 550 verifies the zero-knowledge proof based on the verification reference information, the knowledge proof information, and the private key 512 (step S21).

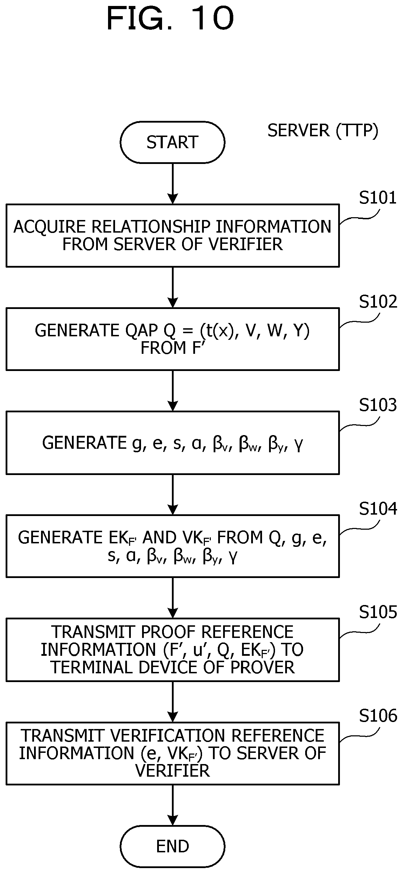

The non-interactive zero-knowledge proof of the total income of the prover is performed in such a procedure. Hereinafter, processing executed by each of the TTP server 400, the terminal device 100 of the prover, and the server 500 of the verifier will be described in detail with reference to FIGs. 10 to 12.

FIG. 10 is a flowchart illustrating an example of a presetting processing procedure by the TTP server. Hereinafter, the processing illustrated in FIG. 10 will be described along step numbers.

[Step S101] The presetting unit 410 acquires the relationship information from the server 500 of the verifier.

[Step S102] The presetting unit 410 generates Q of QAP based on the function F' included in the relationship information. Q contains a plurality of polynomials {t(x), V, W, Y} (V = {$v_k(x)$}, W = {$w_k(x)$}, Y = {$y_k(x)$}, index $k_{[m]}$ = {0,..., m}, where m is an integer indicating the size of Q). t(x) is a target polynomial. The target polynomial is t(x) = (x - $r_1$)(x - $r_2$) ($r_1$ and $r_2$ are random numbers).

Divisibility of the polynomial p(x) = V(x)W(x) - Y(x) by the target polynomial t(x) is a condition for proving that the secret value w input by the prover is correct.

[Step S103] The presetting unit 410 generates a real number g, a bilinear map e, and random real numbers "s, $\alpha$, $\beta$v, $\beta$w, $\beta$y, $\gamma$". Here g is a generator of a group G of the bilinear map e "e: G $\times$ G to $G_T$". s is a parameter that is secret to third parties.

[Step S104] The presetting unit 410 generates the evaluation key $EK_{F'}$ and the verification key $VK_{F'}$ based on °Q, g, e, s, $\alpha$, $\beta_v$, $\beta_w$, $\beta_y$, $\gamma$". Note that the processing of generating the evaluation key $EK_{F'}$ and the verification key $VK_{F'}$ is expressed as "($EK_{F'}$, $VK_{F'}$) <- KeyGen(F, $1^\lambda$)" using a security parameter $\lambda$ (where $\lambda$ is an integer equal to or greater than 1). $1^\lambda$ represents a $\lambda$ bit string of 1s.

The evaluation key $EK_{F'}$ includes the following numerical value group.

[Math. 1]

$$EK_{F'} =$$

$$(\{g^{v_k(s)}\}_{k \in I_{mid}}, \ \{g^{w_k(s)}\}_{k \in [m]}, \ \{g^{y_k(s)}\}_{k \in [m]},$$

$$\{g^{\alpha v_k(s)}\}_{k \in I_{mid}}, \ \{g^{\alpha w_k(s)}\}_{k \in [m]}, \ \{g^{\alpha y_k(s)}\}_{k \in [m]},$$

$$\{g^{\beta_v v_k(s)}\}_{k \in I_{mid}}, \ \{g^{\beta_w w_k(s)}\}_{k \in [m]}, \ \{g^{\beta_y y_k(s)}\}_{k \in [m]},$$

$$\{g^{s^i}\}_{i \in [d]}, \ \{g^{\alpha s^i}\}_{i \in [d]} \ ) \qquad (2)$$

The verification key $VK_{F'}$ includes the following numerical value group.
[Math. 2]

$$VK_{F\prime} =$$

$$\left(g^1, g^\alpha, g^\gamma, g^{\beta_v \gamma}, g^{\beta_w \gamma}, g^{\beta_y \gamma}, g^{t(s)}, \left\{g^{v_k(s)}\right\}_{k \in [N]}, g^{v_0(s)}, g^{w_0(s)}, g^{y_0(s)}\right)$$

$$(3)$$

Imid = {N + 1,..., m}. N is the number of input and output values of the function F. d is the order of Q.

[Step S105] The reference information transmission unit 420 transmits the proof reference information to the terminal device 100 of the prover.

[Step S106] The reference information transmission unit 420 transmits the verification reference information to the server 500 of the verifier.

In this way, the presetting processing by the TTP server 400 is performed. Next, the terminal device 100 of the prover executes proof processing based on the proof reference information.

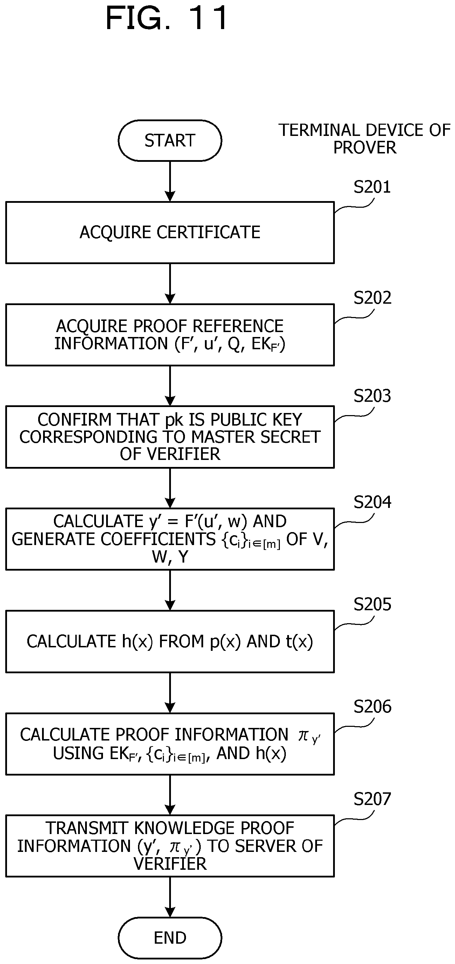

FIG. 11 is a flowchart illustrating an example of a proof processing procedure by the terminal device of the prover. Hereinafter, the processing illustrated in FIG. 11 will be described in accordance with step numbers.

[Step S201] The certificate acquisition unit 110 acquires the certificates 121 and 122 from the servers 200 and 300 of the signers, respectively. The certificate acquisition unit 110 stores the acquired certificates 121 and 122 in the storage unit 120.

[Step S202] The reference information acquisition unit 130 acquires the proof reference information from the TTP server 400.

[Step S203] The zero-knowledge proof unit 140 confirms that the public key pk included in u' is the public key corresponding to the private key vk as a master secret of the verifier. For example, in a case where the TTP server 400 also functions as a certificate authority, the zero-knowledge proof unit 140 obtains the digital signature that guarantees that the public key pk belongs to the verifier from the TTP server 400. The zero-knowledge proof unit 140 confirms that the obtained public key pk is the public key corresponding to the private key vk of the verifier by verifying the obtained digital signature.

[Step S204] The zero-knowledge proof unit 140 generates coefficients $\{c_i\}_{i[m]}$ of the polynomials V, W, Y by calculating y' = F'(u', w) that is a ciphertext of the total income, using u' and w as inputs, and evaluating Q for the function F'. That is, the zero-knowledge proof unit 140 knows correct u' and w with which the calculation result of the function F'(u', w) is y'. Therefore, the zero-knowledge proof unit 140 calculates the coefficients of the polynomials V, W, and Y by substituting the correct u' and w for Q. Specifically, the zero-knowledge proof unit 140 generates polynomial coefficients $\{c_i\}_{i[m]}$ with which the polynomial p(x) = V(x)W(x) - Y(x) is divisible by the target polynomial t(x).

Note that u' includes the public key pk of the verifier, and the calculation algorithm of the function F' includes processing of encrypting y using the public key pk. y is the total income of the prover, and the calculation of y' = F'(u', w) by the zero-knowledge proof unit 140 means obtainment of the ciphertext, which is obtained by encrypting the total income y obtained by correct input with the public key pk of the verifier.

[Step S205] The zero-knowledge proof unit 140 calculates a polynomial h(x) based on the polynomial p(x) and the target polynomial t(x). The polynomial h(x) = p(x)/t(x). Since the polynomial p(x) is divisible by the target polynomial t(x), the coefficients of the polynomial h(x) can also be calculated.

Proving that the prover knows the coefficients of each polynomial that satisfies "V(x)W(x) - Y(x) = H(x)t(x)" to the verifier means proving that the prover knows u', w that satisfy "y' = F'(u', w)". Proving that the prover knows the coefficients of each polynomial can be implemented by a pairing-based cryptography technique using the evaluation key $EK_{F'}$ generated by the TTP server 400 by the presetting processing.

[Step S206] The zero-knowledge proof unit 140 calculates the proof information $\pi_{y'}$, using the pairing-based cryptography technique, based on the evaluation key $EK_{F'}$, the coefficients $\{c_i\}_{i[m]}$ of the polynomials V, W, and Y, and the polynomial h(x). The proof information $\pi_{y'}$ includes the following numerical value group.
[Math. 3]

$$\pi_{y'} =$$

$$\left( g^{v_{mid}(s)}, g^{w(s)}, g^{y(s)}, g^{h(s)}, g^{\alpha v_{mid}(s)}, g^{\alpha w(s)}, g^{\alpha y(s)}, g^{\alpha h(s)}, \right.$$

$$\left. g^{\beta_v v(s) + \beta_w w(s) + \beta_y y(s)} \right)$$

$$v_{mid}(x) = \sum_{k \in I_{mid}} c_k \cdot v_k(x), v(x) = \sum_{k \in [m]} c_k \cdot v_k(x)$$

$$w(x) = \sum_{k \in m} c_k \cdot w_k(x), y(x) = \sum_{k \in [m]} c_k \cdot y_k(x) \qquad (4)$$

In this way, the calculation for generating y' and $\pi_{y'}$ by the zero-knowledge proof unit 140 can be expressed as $(y, \pi_y)$ <- Compute($EK_{F'}$, u').

[Step S207] The zero-knowledge proof unit 140 transmits the knowledge proof information (y', $\pi_{y'}$) to the server 500 of the verifier.

In this way, the knowledge proof information is generated by the terminal device 100 of the prover. The generated knowledge proof information is verified by the server 500 of the verifier.

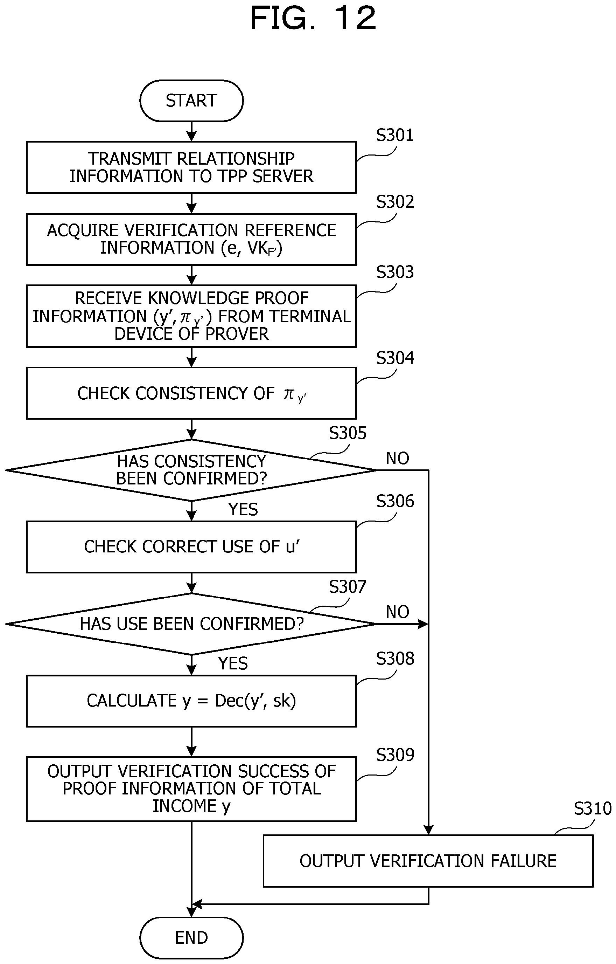

FIG. 12 is a flowchart illustrating an example of a verification processing procedure by the server of the verifier. Hereinafter, the processing illustrated in FIG. 12 will be described in accordance with step numbers.

[Step S301] The relationship information transmission unit 520 transmits the relationship information to the TTP server 400.

[Step S302] The reference information acquisition unit 530 acquires the verification reference information from the TTP server 400.

[Step S303] The proof information acquisition unit 540 acquires the knowledge proof information (y', $\pi_{y'}$) from the terminal device 100 of the prover.

[Step S304] The verification unit 550 checks consistency of the proof information $\pi_{y'}$. The consistency check is expressed by {0, 1} = Verify($VK_{F'}$, u', y', $\pi_{y'}$), and the result is "1" in a case where the consistency is confirmed and the result is "0" in a case where the consistency is not confirmed. The consistency check uses the bilinear map e to confirm that $\alpha$ and $\beta$ are correct. For example, it is confirmed that the following expression is correct.
[Math. 4]

$$e\left(g^{v_{mid}(s)}, g^{\alpha}\right) = e\left(g^{\alpha v_{mid}(s)}, g\right) \qquad (5)$$

Such checks are performed for eight pairings in the $\alpha$ term and three pairings in the $\beta$ term. The verification unit 550 determines that the consistency of the proof information $\pi_{y'}$ has been confirmed in a case where the expression is satisfied in all the checks.

[Step S305] The verification unit 550 determines whether the consistency of the proof information $\pi_{y'}$ has been confirmed. The verification unit 550 advances the processing to step S306 in the case where the consistency is confirmed. Furthermore, the verification unit 550 advances the processing to step S310 in the case where the consistency is not confirmed.

[Step S306] The verification unit 550 checks that the prover has used u' correctly. For example, the verification unit 550 confirms that the following expression is satisfied.
[Math. 5]

$$\frac{e\left(g^{v_0(s)} \cdot g^{v_{io}} \cdot g^{v(s)}, g^{w_0(s)} \cdot g^{w(s)}\right)}{e\left(g^{y_0(s)} \cdot g^{y(s)}, g\right)} = e\left(g^{h(s)}, g^{t(s)}\right) \qquad (6)$$

The verification unit 550 determines that u' has been used correctly in a case where the above expression (6) is satisfied. In the case where the consistency of the proof information $\pi_{y'}$ is confirmed and correct use of u' by the prover is also confirmed, the verification unit 550 can certify that the prover has the certificates 121 and 122 of the total income. At this point, however, the total income is encrypted, and the exact numerical value of the total income proved by the certificates 121 and 122 is unknown.

[Step S307] The verification unit 550 advances the processing to step S308 in the case where use of u' is confirmed. Furthermore, the verification unit 550 advances the processing to step S310 in the case where use of u' is not confirmed.

[Step S308] The verification unit 550 calculates y = Dec(y', sk). This is processing of decrypting the ciphertext y' using the private key sk of the verifier.

[Step S309] The verification unit 550 outputs a result indicating that the verification of the proof information indicating that the prover has the certificates 121 and 122 of the total income y has succeeded. Thereafter, the verification processing ends.

[Step S310] The verification unit 550 outputs a result indicating verification failure. Thereafter, the verification processing ends.

In this way, the non-interactive zero-knowledge proof is implemented. In the non-interactive zero-knowledge proof, the encryption algorithm using the public key pk of the verifier is included in the function F'. Then, y' obtained as the calculation result of the function F' is the ciphertext of the total income of the prover. Only the server 500 of the person (that is, the verifier) who has the private key, which is the master secret of the verifier, can decrypt y'.

Here, it is assumed that the verifier (or someone with malicious intent within an organization of the verifier) plans to leak the total income information with a proof of the prover to a third party. In this case, the verifier needs to pass the knowledge proof information, the verification reference information, and the private key of the verifier to the third party. However, in many cases, the private key is the master secret of the verifier, and a loss due to leakage of the master secret is greater than a profit obtained due to leakage of the information of the prover. Furthermore, the master secret is strictly managed within the organization of the verifier, and only a limited number of people with specific authority can access the master secret. Therefore, the verifier is deterred from information leakage to the third party.

Furthermore, in a case where the verifier passes the knowledge proof information and the verification reference information to the third party, but does not pass the private key of the verifier, the third party will confirm that the prover has the certificates 121 and 122 with which y' (the ciphertext of the total income of the prover) can be correctly obtained. However, in this case, the third party is not able to confirm whether y' is the ciphertext of the total income of the prover. Therefore, leakage of the total income with a proof of the prover can be deterred.

Note that details of the zk-SNARK calculation method used in the second embodiment are detailed in Non-Patent Document 1.

[Other Embodiments]

In the second embodiment, the non-interactive zero-knowledge proof has been implemented by zk-SNARK, but other zero-knowledge proof techniques can also be used. Examples of the other zero-knowledge proofs include zero-knowledge scalable transparent argument of knowledge (zk-STARK), bullet proof, and the like. Presetting (setup) by TTP is unnecessary by using zk-STARK or bullet proof.

The above description merely indicates the principle of the present invention. Moreover, numerous modifications and changes can be made by those skilled in the art. The present invention is not limited to the exact configuration and application examples illustrated and described above, and all corresponding modifications and equivalents are regarded within the scope of the present invention by appended claims and equivalents thereof.

REFERENCE SIGNS LIST

1 First information processing device
1a Storage unit
1b Processing unit
2 Second information processing device
3 Certificate

**Claims**

1. A knowledge proof method comprising:

by a first information processing device managed by a prover,
generating a ciphertext obtained by encrypting a predetermined value with a public key of a verifier;
generating proof information that proves, by a non-interactive zero-knowledge proof, having a secret value to be kept secret included in a second input value with which the ciphertext is able to be obtained as a calculation result in a case where the second input value is input to a second function, based on the second function and the second input value, wherein the second function includes calculation represented by a first function in which a calculation result in a case where a first input value is input becomes the predetermined value and calculation in which the calculation result of the first function is encrypted with the public key, and the second input value includes the first input value and the public key; and

transmitting knowledge proof information that includes the ciphertext and the proof information to a second information processing device managed by the verifier, who has a private key that corresponds to the public key.

2. The knowledge proof method according to claim 1, wherein

the second information processing device
verifies that the prover has the secret value based on the knowledge proof information,
decrypts the ciphertext using the private key of the verifier, and
certifies that the prover knows the secret value to be included in the first input value to set the calculation result of the first function to be the predetermined value in a case where the verification is successful and the predetermined value is obtained by the decryption.

3. The knowledge proof method according to claim 2, wherein

the first information processing device acquires proof reference information for the non-interactive zero-knowledge proof by zero-knowledge succinct non-interactive argument of knowledge (zk-SNARK) from a third information processing device managed by a trustable third party, and generates the proof information using the proof reference information, and

the second information processing device acquires verification reference information for the non-interactive zero-knowledge proof by zk-SNARK from the third information processing device, and verifies that the prover has the secret value using the verification reference information.

4. The knowledge proof method according to any one of claims 1 to 3, wherein the predetermined value includes personal information of the prover, and the secret value includes information that proves that the personal information is authentic.

5. The knowledge proof method according to claim 4, wherein the secret value includes a digital signature that proves that the personal information is authentic, and the first input value includes a verification key that corresponds to a signature key used to generate the digital signature.

6. A knowledge proof program that causes a first information processing device managed by a prover to execute a process, the process comprising:

generating a ciphertext obtained by encrypting a predetermined value with a public key of a verifier;
generating proof information that proves, by a non-interactive zero-knowledge proof, having a secret value to be kept secret included in a second input value with which the ciphertext is able to be obtained as a calculation result in a case where the second input value is input to a second function, based on the second function and the second input value, wherein the second function includes calculation represented by a first function in which a calculation result in a case where a first input value is input becomes the predetermined value and calculation in which the calculation result of the first function is encrypted with the public key, and the second input value includes the first input value and the public key; and
transmitting knowledge proof information that includes the ciphertext and the proof information to a second information processing device managed by the verifier, who has a private key that corresponds to the public key.

7. An information processing device comprising
a control unit configured to:

generate a ciphertext obtained by encrypting a predetermined value with a public key of a verifier,
generate proof information that proves, by a non-interactive zero-knowledge proof, having a secret value to be kept secret included in a second input value with which the ciphertext is able to be obtained as a calculation result in a case where the second input value is input to a second function, based on the second function and the second input value, wherein the second function includes calculation represented by a first function in which a calculation result in a case where a first input value is input becomes the predetermined value and calculation in which the calculation result of the first function is encrypted with the public key, and the second input value includes the first input value and the public key, and

transmit knowledge proof information that includes the ciphertext and the proof information to a second information processing device managed by the verifier, who has a private key that corresponds to the public key.

# FIG. 1

**1 — FIRST INFORMATION PROCESSING DEVICE (PROVER)**

**1a — STORAGE UNIT**

**3 — CERTIFICATE (PERSONAL INFORMATION + DIGITAL SIGNATURE)**

**1b — PROCESSING UNIT**

PREDETERMINED VALUE
y = PERSONAL
INFORMATION

PUBLIC KEY pk OF
VERIFIER

GENERATE CIPHERTEXT y′ OBTAINED BY
ENCRYPTING PREDETERMINED VALUE y
WITH PUBLIC KEY pk OF VERIFIER

GENERATE PROOF INFORMATION
OF KNOWING w SATISFYING y′ =
F′(u′, w) (zk-SNARK)

KNOWLEDGE PROOF INFORMATION
(PROOF INFORMATION +
CIPHERTEXT y′)

FUNCTION F $(y = F(u, w))$
$u = \{\text{VERIFICATION KEY}\}$
$w = \{\text{CERTIFICATE}\}$
↓
FUNCTION $F′ = \text{Enc}(pk, y)$
↓
$y′ = F′(u′, w)$
$u′ = \{\text{VERIFICATION KEY}, pk\}$

**2 — SECOND INFORMATION PROCESSING DEVICE (VERIFIER)**

VERIFY PROOF INFORMATION $\pi$

DECRYPT CIPHERTEXT y′ WITH PRIVATE
KEY (vk) OF VERIFIER

# FIG. 2

# FIG. 3

# FIG. 4

# FIG. 5

ENCRYPTION WITH
PUBLIC KEY OF
VERIFIER

DECRYPTION WITH
PRIVATE KEY OF
VERIFIER

KNOWLEDGE
PROOF
INFORMATION
(CIPHERTEXT)

KNOWLEDGE
PROOF
INFORMATION
(PLAINTEXT)

VERIFIABLE

42

43

45

PROVER

VERIFIER

VERIFIER

PUBLIC
FIGURE

SERVICE

FINANCIAL
INSTITUTION
(FRAUDULENT ACTOR
INTERNALLY)

CONSIDERATION

NEWS
MEDIA

# FIG. 6

TTP 44

SIGNER 41
PUBLIC INSTITUTION

INCOME CERTIFICATE (WITH SIGNATURE)

PROVER 42
PUBLIC FIGURE

KNOWLEDGE PROOF INFORMATION

SERVICE

VERIFIER 43
FINANCIAL INSTITUTION

ENTRUSTMENT DETERRENT EFFECT

VERIFIER 45
NEWS MEDIA

ENCRYPT CALCULATION RESULT y OF FUNCTION F WITH PUBLIC KEY OF FINANCIAL INSTITUTION

VERIFICATION USING MASTER SECRET (PRIVATE KEY)

# FIG. 7

# FIG. 8

200

300

400

SERVER (TTP)

410

PRESETTING UNIT

420

REFERENCE INFORMATION TRANSMISSION UNIT

100

TERMINAL DEVICE (PROVER)

110

CERTIFICATE ACQUISITION UNIT

130

REFERENCE INFORMATION ACQUISITION UNIT

120

STORAGE UNIT

121

CERTIFICATE

140

ZERO-KNOWLEDGE PROOF UNIT

122

CERTIFICATE

150

PROOF INFORMATION TRANSMISSION UNIT

500

SERVER (VERIFIER)

540

PROOF INFORMATION ACQUISITION UNIT

530

REFERENCE INFORMATION ACQUISITION UNIT

510

STORAGE UNIT

511

RELATIONSHIP INFORMATION

550

VERIFICATION UNIT

512

PRIVATE KEY

520

RELATIONSHIP INFORMATION TRANSMISSION UNIT

# FIG. 9

EP 4 191 939 A1

# FIG. 10

SERVER (TTP)

```
        ( START )

           ↓

  ACQUIRE RELATIONSHIP INFORMATION          S101
      FROM SERVER OF VERIFIER

           ↓

  GENERATE QAP Q = (t(x), V, W, Y)          S102
            FROM F′

           ↓

  GENERATE g, e, s, α, βᵥ, βᵥᵥ, βᵧ, γ        S103

           ↓

  GENERATE EK_F′ AND VK_F′ FROM Q, g, e,     S104
       s, α, βᵥ, βᵥᵥ, βᵧ, γ

           ↓

     TRANSMIT PROOF REFERENCE               S105
   INFORMATION (F′, u′, Q, EK_F′) TO
     TERMINAL DEVICE OF PROVER

           ↓

  TRANSMIT VERIFICATION REFERENCE           S106
  INFORMATION (e, VK_F′) TO SERVER OF
              VERIFIER

           ↓

         ( END )
```

# FIG. 11

TERMINAL DEVICE OF PROVER

START

↓

**S201**

ACQUIRE CERTIFICATE

↓

**S202**

ACQUIRE PROOF REFERENCE INFORMATION (F', u', Q, $EK_{F'}$)

↓

**S203**

CONFIRM THAT pk IS PUBLIC KEY CORRESPONDING TO MASTER SECRET OF VERIFIER

↓

**S204**

CALCULATE y' = F'(u', w) AND GENERATE COEFFICIENTS $\{c_i\}_{i \in [m]}$ OF V, W, Y

↓

**S205**

CALCULATE h(x) FROM p(x) AND t(x)

↓

**S206**

CALCULATE PROOF INFORMATION $\pi_{y'}$ USING $EK_{F'}$, $\{c_i\}_{i \in [m]}$, AND h(x)

↓

**S207**

TRANSMIT KNOWLEDGE PROOF INFORMATION (y', $\pi_{y'}$) TO SERVER OF VERIFIER

↓

END

# FIG. 12

```
        ┌─────────────┐
        │    START    │
        └─────────────┘
               │
               ▼
  ┌──────────────────────────────┐  S301
  │  TRANSMIT RELATIONSHIP       │
  │  INFORMATION TO TPP SERVER   │
  └──────────────────────────────┘
               │
               ▼
  ┌──────────────────────────────┐  S302
  │  ACQUIRE VERIFICATION        │
  │  REFERENCE INFORMATION       │
  │  (e, VK_{F'})                │
  └──────────────────────────────┘
               │
               ▼
  ┌──────────────────────────────┐  S303
  │  RECEIVE KNOWLEDGE PROOF     │
  │  INFORMATION (y', π_{y'})    │
  │  FROM TERMINAL DEVICE OF     │
  │  PROVER                      │
  └──────────────────────────────┘
               │
               ▼
  ┌──────────────────────────────┐  S304
  │  CHECK CONSISTENCY OF π_{y'} │
  └──────────────────────────────┘
               │
               ▼
        ◇ S305
   HAS CONSISTENCY           NO
   BEEN CONFIRMED?  ─────────────┐
        ◇                        │
         │ YES                   │
         ▼                       │
  ┌──────────────────────┐ S306  │
  │ CHECK CORRECT USE    │       │
  │ OF u'                │       │
  └──────────────────────┘       │
         │                       │
         ▼                       │
        ◇ S307                   │
   HAS USE BEEN         NO        │
   CONFIRMED?  ──────────────────►│
        ◇                        │
         │ YES                   │
         ▼                       │
  ┌──────────────────────┐ S308  │
  │ CALCULATE            │       │
  │ y = Dec(y', sk)      │       │
  └──────────────────────┘       │
         │                       │
         ▼                       │
  ┌──────────────────────┐ S309  │
  │ OUTPUT VERIFICATION  │       │
  │ SUCCESS OF PROOF     │       │
  │ INFORMATION OF       │       ▼
  │ TOTAL INCOME y       │  ┌──────────────────────┐ S310
  └──────────────────────┘  │ OUTPUT VERIFICATION  │
         │                  │ FAILURE              │
         │                  └──────────────────────┘
         │◄──────────────────────────┘
         ▼
   ┌──────────┐
   │   END    │
   └──────────┘
```

**INTERNATIONAL SEARCH REPORT**

| International application No. |
| --- |
| PCT/JP2020/028716 |

A. CLASSIFICATION OF SUBJECT MATTER
Int. Cl. H04L9/32(2006.01)i
FI: H04L9/00 675C

According to International Patent Classification (IPC) or to both national classification and IPC

B. FIELDS SEARCHED

Minimum documentation searched (classification system followed by classification symbols)
Int. Cl. H04L9/32

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2004-005643 A (INTERNATIONAL BUSINESS MACHINES | 1-2, 4-7 |
| Y | CORP.) 08 January 2004, paragraphs [0021]-[0034], fig. 1-3, 028716 | 3-5 |
| Y | 福田竜央, ブロックチェーンを用いたインセンティブ付与を考慮した効率的な IoT 機器ファームウェア配布手法, 2020 年暗号と情報セキュリティシンポジウム予稿集, 21 January 2020, pp. 1-8, in particular, p. 3, left column, line 4 to right column, line 17 (FUKUDA, Tatsuhiro. Efficient blockchain-based IoT firmware update considering distribution incentives. Proceedings of the 2020 Symposium on Cryptography and Information Security.) | 3-5 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 12.10.2020 | 20.10.2020 |

| Name and mailing address of the ISA/ | Authorized officer |
| --- | --- |
| Japan Patent Office
3-4-3, Kasumigaseki, Chiyoda-ku,
Tokyo 100-8915, Japan | |
| | Telephone No. |

Form PCT/ISA/210 (second sheet) (January 2015)

INTERNATIONAL SEARCH REPORT
Information on patent family members

| International application No. |
| --- |
| PCT/JP2020/028716 |

| Patent Documents referred to in the Report | Publication Date | Patent Family | Publication Date |
| --- | --- | --- | --- |
| JP 2004-005643 A | 08.01.2004 | US 2005/0010535 A1 paragraphs [0025]- [0036], fig. 1-3 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9171349 A

**Non-patent literature cited in the description**

- **B. PARNO ; C. GENTRY ; J. HOWELL ; M. RAYK-OVA.** Pinocchio: nearly practical verifiable computation. *IEEE Symposium on Security and Privacy Oakland 2013,* 13 May 2013

- **KEN NAGANUMA.** Anonymous Remittance on Distributed Ledger and its Audit -Secure Protocol Using Zero-Knowledge Proof. *Information Processing,* 15 January 2020, vol. 61 (2), 152-158